# EUROPEAN PATENT SPECIFICATION

(11) **EP 3 088 367 B1**
(45) Date of publication and mention of the grant of the patent: **31.01.2018**
(21) Application number: 15165598.2
(22) Date of filing: 29.04.2015
(51) Int. Cl.: C02F 9/02, C02F 1/40, C02F 103/38

(54) **METHOD FOR CLEANING WATER COLLECTED IN A POLYMER PLANT**
VERFAHREN ZUR REINIGUNG VON IN EINER POLYMERANLAGE GESAMMELTEM WASSER
PROCÉDÉ DE NETTOYAGE D'EAU COLLECTÉE DANS UNE INSTALLATION DE POLYMÈRE

(43) Date of publication of application: 02.11.2016
(73) Proprietor: Borealis AG, 1220 Vienna (AT)
(72) Inventor: Magnusson, Christian, 442 41 Kungälv (SE)
(74) Representative: Kador & Partner

(56) References cited:
- WO-A1-96/30102
- WO-A1-2014/202633
- WO-A2-2008/014201
- DE-A1- 2 220 867
- Pentair Aquatic Eco Systems: "PR AQUA ROTOFILTER DRUM FILTER", , 20 February 2015 (2015-02-20), XP002742085, Retrieved from the Internet: URL:http://samples.gyroclients11.com/Penta ir/AES-site-refresh/PDF-Files/pr_aqua_drum _filter_brochure_05.pdf [retrieved on 2015-07-08] & Google: , 8 July 2015 (2015-07-08), Retrieved from the Internet: URL:https://www.google.nl/search?q=pr+aqua +rotary+filter&source=lnt&tbs=cdr%3A1%2Ccd _min%3A1%2F1%2F2015%2Ccd_max%3A31%2F3%2F20 15&tbm= [retrieved on 2015-07-08]
- SHARRER M J ET AL: "Evaluation of geotextile filtration applying coagulant and flocculant amendments for aquaculture biosolids dewatering and phosphorus removal", AQUACULTURAL ENGINEERING, ELSEVIER SCIENCE PUBLISHERS LTD, AMSTERDAM, NL, vol. 40, no. 1, 1 January 2009 (2009-01-01), pages 1-10, XP025860134, ISSN: 0144-8609, DOI: 10.1016/J.AQUAENG.2008.10.001 [retrieved on 2008-10-17]
- U.S. Environmental Protection Agency, Office of Water: "Filter Backwash Recycling Rule Technical Guidance Manual", , 1 December 2002 (2002-12-01), XP002742086, Retrieved from the Internet: URL:http://www.epa.gov/safewater/mdbp/pdf/ filterbackwash/fbrr_techguidance.pdf [retrieved on 2015-07-09]

## Description

### Field of the Invention

The present invention is directed to treating water collected in a polymer plant. More specifically, the present invention is directed to a method of removing polymer form the surface water, such as rainwater, in a polymer plant.

### Problem to Be Solved

The surface water, e.g. rainwater, collected from the polymer plant area often contains polymer in different forms, such as pellets or dust. If the polymer is passed to the environment it may cause harm to animals, like sea life or birds. Therefore it is desired to remove the polymer from water streams which are passed to the environment from plants where plastics are manufactured or handled.
Also process water, such as pellet water, may contain polymer as impurity and the problems as described above apply equally to such process water.
While methods for removing plastics from water streams are known they have drawbacks. Many methods are based on decantation where the plastics are removed from the surface of the water. Such methods are effective in removing larger objects, such as articles, like films and bottles, and even pellets but they are ineffective in removing fine polymer dust from the water. WO-A-2014014345 discloses an internally fed drum filter for removing coarse impurities whose inlet distribution arrangement comprises an adjustable flow distribution member arranged near the outflow opening of the inlet duct. The filter was reported to be less prone for clogging than the conventional filters. WO2008014201 discloses a process for purifying wash water in a polymer manufacturing plant containing polymer particles using media filtration with reverse osmosis membranes.

DE2220867 discloses a process for removing fine polymer particles from process water of a polymer manufacturing plant, wherein the contaminated water is passed to a first separator (flotation using surfactants) and the particles in the froth from this process are separated using a drum filter. The objective of the present invention is thus to provide a method which effectively and economically re+moves polymer from water, especially from surface water and process water, and which is reliable in operation. The method has low cost of investment and operation.

### Summary of the Invention

The present invention provides a method for treating polymer contaminated water in a polymer plant, comprising the steps of: (i) passing polymer contaminated water to a first separator; (ii) removing a part of contaminations from the polymer contaminated water in the first separator; (iii) establishing a stream of water from the first separator under the action of gravity to a filter having a first filter surface and a second filter surface; (iv) withdrawing a stream of purified water from the filter through the first filter surface; (v) determining the level of water in the filter; (vi) when the level of water in the filter increases above a predetermined level, withdrawing the stream of the purified water through the second filter surface; (vii) purging the first filter surface with a purge water stream to remove deposit from the first filter surface, thereby establishing a stream of waste water comprising the purge water and the deposit; (viii) passing the waste water to a bag filter for removing the deposit from the water thereby producing a recycle water stream; (ix) passing the recycle water stream to the first separator; and (x) discharging at least a part of the purified water stream to the environment.

### Detailed Description

The water, like process water or surface water, such as rainwater, which is collected in a polymer plant and subsequently drained, often contains impurities, such as oil and polymer. The polymer may appear in different forms, such as pellets or articles. A part of such polymer can be removed from water by skimming. However, fine polymer dust sometimes does not surface so readily and even if it does it is more difficult to remove.

The surface water within the plant is collected and passed to one or more treatment stations. This is done by using water collectors and drain pipes or drain channels. The water arriving at a treatment station is first passed to a first separator.

### First separator

The first separator has the objective of removing a part of impurities from the water. Such impurities include larger objects like polymer pellets, polymer articles, such as films, and the like. Also oils which float on the water surface can be removed in the first separator. The separation is suitably done by collecting the feed water to a basin where the water is withdrawn through a water trap. The light impurities may then be removed from the surface either intermittently, e.g., by skimming, or continuously. The heavy impurities may be removed from the water trap intermittently. The impurities collected from the first separator are then sent to further treatment, e.g., incineration.

The first separator also has the objective of maintaining the water to be passed to the filter. The first separator is situated and designed so that there is a sufficient pressure difference for the water to flow into the filter. Typically, the first separator is located at a higher level than the filter and the flow of water is thus established by gravity. Furthermore, the outlet from the first separator may be at a level near the bottom whereby the hydrostatic pressure in the first separator contributes to the pressure difference.

### Filter

The filter may be a suitable filter known in the art, such as a disk filter or a drum filter. A drum filter is especially preferred. The water is passed into the filter and drained through the filter surface. The impurities remain inside the filter while clean water passes out. The clean water is directed to an outlet chamber and subsequently to a buffer pond from where it is exhausted to the environment.

Both the first and the second filter surface comprise a mesh or a cloth having openings of from 1 to 50 µm, preferably from 5 to 50 µm and more preferably from 5 to 30 µm.

When the water passes through the first filter surface the filter becomes gradually clogged by impurities contained in the water. Thereby the flow of the water through the filter reduces and the water level within the filter increases. At a suitable time the water is adapted to pass through the second filter surface. Simultaneously the first filter surface is subjected to cleaning.

If the filter is the drum filter, the step of adapting the water to pass through the second filter surface is conveniently done by rotating the drum. At the same time as the drum rotates water is sprayed to the filter surface from the outside. The water then removes the deposit from the filter surface. The stream of waste water comprising water and the deposit is withdrawn from the filter. The waste water is suitably passed to a reject pit from where it is passed to a bag filter.

Suitably the filter is a drum filter having at least a lower chamber and an upper chamber which are at least partially separated from each other by a solid wall. The water inlet is connected to the lower chamber and the waste stream outlet is connected to the upper chamber.

In normal operation the drum filter stands still. The water passes through the lower part of the drum (the first filter surface) to the outlet chamber. When the filter becomes plugged due to the contaminations in the water the water level in the filter starts to increase.

The water level in the filter is detected by using suitable level sensors or level switches known in the art. When the level reaches a predetermined upper limit then the drum filter starts rotating. The rotation of the filter allows water to pass through the second filter surface which is not plugged. Thereby the flow of water becomes less restricted and the water level in the filter starts to reduce. The rotation of the filter continues until the water level inside the filter reaches a predetermined lower limit. Then the rotation stops and the water is adapted to flow out of the filter again through the first filter surface.

The cleaning water is preferably taken from the clean water outlet chamber. The cleaning water stream is then passed by one or more pumps to nozzles through which it is sprayed at a high pressure to the outside of the filter surface. The water flows through the filter surface to the inside of the filter, thereby removing the deposit from the filter surface. Preferably the pumps are protected by one or more in-line filters which prevent solid material from clogging the pumps and the nozzles.

The waste water is withdrawn from the filter through a waste stream outlet. As described above, the waste water is suitably passed to the reject pit. From the reject pit the waste stream is passed to the bag filter. For instance, the waste stream is pumped from the reject pit so that the level in the reject pit remains constant, or within specified limits.

### Bag filter

The waste stream is passed to the bag filter where the solids are removed from the water. The solids remain in the filter and the water is returned to the feed basin. The filter bags are changed in a suitable period and the waste therein is sent, for instance, to incineration.

### Example

Rainwater from a plant area was collected to a feed basin. The water contained polymer pellets and polymer dust. From the feed basin a water stream of 10 m³/h was passed to a drum filter having filter surface with openings of 10 µm.

When the water level within the filter increased to a predetermined limit the filter was rotated and flush water was sprayed to the outside of the filter surface. The water level within the filter started to decrease. After a period of about 30 seconds the water level reached a predetermined lower limit and the rotation was stopped. Water spraying was then also stopped. After a period of about 3 minutes the water level again reached the predetermined upper limit and the rotation and flushing of the filter was restarted.

The feed water contained polymer particles in an amount of about 30,000,000 particles per cubic metre, out of which from 10,000 to 1,000,000 had a size of at least 300 µm. They were effectively trapped by the filter and clean water was passed to a buffer pond.

## Claims

1. A process for treating polymer contaminated water in a polymer plant, comprising the steps of: (i) passing polymer contaminated water to a first separator; (ii) removing a part of contaminations from the polymer contaminated water in the first separator; (iii) establishing a stream of water from the first separator under the action of gravity to a filter having a first filter surface and a second filter surface; (iv) withdrawing a stream of purified water from the filter through the first filter surface; (v) determining the level of water in the filter; (vi) when the level of water in the filter increases above a predetermined level, withdrawing the stream of the purified water through the second filter surface; (vii) purging the first filter surface with a purge water stream to remove deposit from the first filter surface, thereby establishing a stream of waste water comprising the purge water and the deposit; (viii) passing the waste water to a bag filter for removing the deposit from the water thereby producing a recycle water stream; (ix) passing the recycle water stream to the first separator; and (x) discharging at least a part of the purified water stream to the environment.

2. The process according to claim 1 wherein the first filter surface and the second filter surface have openings within the range of from 1 to 50 µm.

3. The process according to claim 2 wherein the first filter surface and the second filter surface have openings within the range of from 5 to 30 µm.

4. The process according to any one of the preceding claims comprising the additional steps of (vii-a) when the level of water in the filter increases above a predetermined level, withdrawing the purge water stream from the stream of purified water; and (vii-b) passing the purge water stream to step (viii).

5. The process according to any one of the preceding claims wherein the filter having the first filter surface and the second filter surface is a drum filter.

6. The process according to claim 5 wherein the step of withdrawing the stream of the purified water through the second filter surface is done by rotating the drum filter.

7. The process according to claim 6 wherein the process comprises rotating the drum filter until the water level within the drum filter reaches a predetermined lower limit.

8. The process according to any one of the preceding claims wherein contaminations lighter than water are removed from the surface of the first separator.

9. The process according to claim 8 wherein contaminations heavier than water are removed from a water trap.

10. The process according to any one of the preceding claims wherein the process comprises a reject pit downstream of the filter and upstream of the bag filter and the waste water is passed from the filter to the reject pit.

11. The process according to claim 10 wherein the flow of waste water to the bag filter is set by a level controller in the reject pit.

## Patentansprüche

1. Verfahren zum Behandeln von polymerkontaminierten Wasser in einer Polymeranlage, umfassend die folgenden Schritte: (i) Überführen von polymerkontaminierten Wasser zu einem ersten Separator; (ii) Entfernen von einem Teil der Kontaminationsstoffe aus dem polymerkontaminierten Wasser in dem ersten Separator; (iii) Etablieren von einem Strom aus Wasser aus dem ersten Separator unter der Einwirkung von Schwerkraft auf einen Filter, der eine erste Filteroberfläche und eine zweite Filteroberfläche aufweist; (iv) Abziehen von einem Strom aus gereinigtem Wasser aus dem Filter durch die erste Filteroberfläche; (v) Bestimmen von dem Wasserpegel in dem Filter; (vi) wenn der Wasserpegel in dem Filter über einen vorbestimmten Pegel ansteigt, Abziehen des Stroms aus dem gereinigten Wasser durch die zweite Filteroberfläche; (vii) Spülen von der ersten Filteroberfläche mit einem Spülwasserstrom, um Ablagerung aus der ersten Filteroberfläche zu entfernen, wodurch ein Strom aus Abwasser etabliert wird, der das Spülwasser und die Ablagerung umfasst; (viii) Überführen von dem Abwasser zu einem Taschenfilter, um die Ablagerung aus dem Wasser zu entfernen, wodurch ein Rückführwasserstrom erzeugt wird; (ix) Überführen von dem Rückführwasserstrom zu dem ersten Separator; und (x) Entlassen von mindestens einem Teil des gereinigten Wasserstroms in die Umwelt.

2. Verfahren nach Anspruch 1, wobei die erste Filteroberfläche und die zweite Filteroberfläche Öffnungen innerhalb des Bereichs von 1 bis 50 µm aufweisen.

3. Verfahren nach Anspruch 2, wobei die erste Filteroberfläche und die zweite Filteroberfläche Öffnungen innerhalb des Bereichs von 5 bis 30 µm aufweisen.

4. Verfahren nach einem der vorhergehenden Ansprüche, umfassend die folgenden zusätzlichen Schritte: (vii-a) wenn der Wasserpegel in dem Filter über einen vorbestimmten Pegel ansteigt, Abziehen von dem Spülwasserstrom aus dem Strom von gereinigtem Wasser; und (vii-b) Überführen von dem Spülwasserstrom zu dem Schritt (viii).

5. Verfahren nach einem der vorhergehenden Ansprüche, wobei der Filter, der die erste Filteroberfläche und die zweite Filteroberfläche aufweist, ein Trommelfilter ist.

6. Verfahren nach Anspruch 5, wobei der Schritt des Abziehens von dem Strom aus gereinigten Wasser durch die zweite Filteroberfläche bewerkstelligt wird, indem der Trommelfilter gedreht wird.

7. Verfahren nach Anspruch 6, wobei das Verfahren das Drehen von dem Trommelfilter umfasst, bis der Wasserpegel innerhalb des Trommelfellfilters einen vorbestimmten, niedrigeren Grenzwert erreicht.

8. Verfahren nach einem der vorhergehenden Ansprüche, wobei Kontaminationsstoffe, die leichter als Wasser sind, aus der Oberfläche von dem ersten Separator entfernt werden.

9. Verfahren nach Anspruch 8, wobei die Kontaminationsstoffe, die schwerer als Wasser sind, aus einem Wasserabscheider entfernt werden.

10. Verfahren nach einem der vorhergehenden Ansprüche, wobei das Verfahren dem Filter nachgeschaltet und dem Taschenfilter vorgeschaltet eine Absonderungsgrube [Englisch: reject pit] umfasst und das Abwasser von dem Filter zu der Absonderungsgrube überführt wird.

11. Verfahren nach Anspruch 10, wobei die Strömung von dem Abwasser zu dem Taschenfilter durch eine Pegelsteuerung in der Absonderungsgrube festgelegt wird.

## Revendications

1. Procédé de traitement d'une eau contaminée par des polymères dans une usine de fabrication de polymères, comprenant les étapes consistant à :
(i) faire passer l'eau contaminée par des polymères dans un premier séparateur ;
(ii) éliminer une partie des contaminants de l'eau contaminée par des polymères dans le premier séparateur ;
(iii) établir un courant d'eau à partir du premier séparateur sous l'action de la gravité vers un filtre ayant une première surface de filtration et une seconde surface de filtration ;
(iv) retirer un courant d'eau purifiée à partir du filtre par l'intermédiaire de la première surface de filtration ;
(v) déterminer le niveau de l'eau dans le filtre ;
(vi) lorsque le niveau de l'eau dans le filtre augmente au-dessus d'un niveau prédéfini, retirer le courant d'eau purifiée par l'intermédiaire de la seconde surface de filtration ;
(vii) purger la première surface de filtration avec un courant d'eau de purge pour éliminer le dépôt de la première surface de filtration, établissant ainsi un courant d'eaux usées comprenant l'eau de purge et le dépôt ;
(viii) faire passer les eaux usées sur un filtre à sac pour éliminer le dépôt de l'eau, produisant ainsi un courant d'eau recyclée ;
(ix) faire passer le courant d'eau recyclée dans le premier séparateur ; et
(x) libérer au moins une partie du courant d'eau purifiée dans l'environnement.

2. Procédé selon la revendication 1, dans lequel la première surface de filtration et la seconde surface de filtration ont des ouvertures comprises dans la plage allant de 1 à 50 µm.

3. Procédé selon la revendication 2, dans lequel la première surface de filtration et la seconde surface de filtration ont des ouvertures comprises dans la plage allant de 5 à 30 µm.

4. Procédé selon l'une quelconque des revendications précédentes comprenant les étapes supplémentaires consistant à
(vii-a) lorsque le niveau de l'eau dans le filtre augmente au-dessus d'un niveau prédéfini, retirer le courant d'eau de purge du courant d'eau purifiée ; et
(vii-b) faire passer le courant d'eau de purge dans l'étape (viii).

5. Procédé selon l'une quelconque des revendications précédentes, dans lequel le filtre ayant la première surface de filtration et la seconde surface de filtration est un filtre à tambour.

6. Procédé selon la revendication 5, dans lequel l'étape de retrait du courant d'eau purifiée par l'intermédiaire de la seconde surface de filtration est réalisée en faisant tourner le filtre à tambour.

7. Procédé selon la revendication 6, dans lequel le procédé comprend la rotation du filtre à tambour jusqu'à ce que le niveau de l'eau dans le filtre à tambour atteigne une limite inférieure prédéfinie.

8. Procédé selon l'une quelconque des revendications précédentes, dans lequel les contaminants plus légers que l'eau sont éliminés de la surface du premier séparateur.

9. Procédé selon la revendication 8, dans lequel les contaminants plus lourds que l'eau sont éliminés à partir d'une cuve de décantation.

10. Procédé selon l'une quelconque des revendications précédentes, dans lequel le procédé comprend une fosse de rejet en aval du filtre et en amont du filtre à sac et les eaux usées passent du filtre vers la fosse de rejet.

11. Procédé selon la revendication 10, dans lequel l'écoulement des eaux usées vers le filtre à sac est fixé par un régulateur de niveau dans la fosse de rejet.
